# EUROPÄISCHE PATENTSCHRIFT

(11) **EP 2 320 092 B1**
(45) Veröffentlichungstag und Bekanntmachung des Hinweises auf die Patenterteilung: **13.11.2013**
(21) Anmeldenummer: 10015306.3
(22) Anmeldetag: 18.01.2007
(51) Int. Cl.: H02K 11/00, F04D 29/42, F04D 29/62, H02K 5/22

(54) **Pumpenaggregat**
Pump unit
Unité de pompage

(43) Veröffentlichungstag der Anmeldung: 11.05.2011
(62) Teilanmeldung aus: 07000972.5
(73) Patentinhaber: Grundfos Management A/S, 8850 Bjerringbro (DK)
(72) Erfinder: Andersen, Lars Kannegaard, 8920 Randers NV (DK); Mikkelsen, Steen, 8850 Bjerringbro (DK); Poulsen, Brian Lundsted, 8870 Langaa (DK)
(74) Vertreter: Hemmer, Arnd

(56) Entgegenhaltungen:
- DE-A1- 4 418 166
- DE-A1- 10 005 505
- US-A- 6 065 946

## Beschreibung

Die Erfindung betrifft ein Pumpenaggregat mit einem Elektromotor.

Pumpenaggregate, welche durch einen Elektromotor angetrieben werden, werden beispielsweise als Heizungsumwälzpumpen eingesetzt. Diese weisen üblicherweise ein Pumpengehäuse mit einem daran angesetzten Statorgehäuse auf, in welchem der Elektromotor zum Antrieb eines in dem Pumpengehäuse angeordneten Laufrades angeordnet ist. An dem Statorgehäuse ist üblicherweise ein Klemmenkasten angeordnet, welcher die elektrischen Anschlüsse für den Elektromotor und gegebenenfalls elektrische bzw. elektronische Bauteile zur Steuerung und/oder Regelung des Elektromotors aufnimmt. Dabei ist es bekannt, einen derartigen Klemmenkasten axialseitig, d. h. an der dem Pumpengehäuse abgewandten Stirnseite des Statorgehäuses zu befestigen. Ferner sind im Klemmenkasten häufig Anzeige- und Bedienungselemente zur Kontrolle und Einstellstellung des Pumpenaggregates vorgesehen.

DE 44 18 166 A1 offenbart ein Pumpenaggregat, welches einen elektrischen Antriebsmotor aufweist, welcher in einem Statorgehäuse angeordnet ist. Dieses Statorgehäuse weist eine axialseitige Verlängerung auf, welche gemeinsam mit einem topfförmigen Deckel einen Anschlussraum begrenzt, in welchem eine elektrische Anschlussleitung mit den elektrischen Anschlüssen des Stators verbunden ist. Dieser elektrische Anschlussraum ist nicht zur Aufnahme einer Vielzahl elektronischer Bauteile, wie sie für eine elektronisch gesteuerte Pumpe erforderlich wären, vorgesehen.

DE 100 05 505 A1 offenbart einen steckbaren Klemmenkasten mit elektrischen Leiterbahnen, welche in den Boden des Klemmenkastens eingegossen sind. Der Klemmenkasten ist dafür vorgesehen, an der Umfangsseite eines Elektromotors angeordnet zu werden.

US 6,065 946 offenbart ein Pumpenaggregat mit einem rohrförmigen Gehäuse, in welchem ein vergossener Stator, sowie mehrere sich quer zur Drehachse des Rotors erstreckende Leiterplatten angeordnet sind. Stirnseitig ist das Gehäuse durch einen Deckel verschlossen, in welchem Bedien- und Anzeigeelemente sowie ein elektrischer Anschluss angeordnet sind. Bei diesem Pumpenaggregat besteht die Schwierigkeit, dass in dem Gehäuse mehrere Leiterplatten angeordnet und miteinander kontaktiert werden müssen. Ferner ist es erforderlich, den Stator vorher einzugießen. Insgesamt ist die Montage dieses Pumpenaggregates recht aufwändig.

Im Hinblick auf diesen Stand der Technik ist es Aufgabe der Erfindung, ein Pumpenaggregat mit einem axialseitig angeordneten Klemmenkasten bereitzustellen, welches eine übersichtliche und gut zugängliche Anordnung der Bedien- und Anzeigeelemente zulässt und darüber hinaus kostengünstig zu fertigen und leicht zu montieren ist.

Diese Aufgabe wird durch ein Pumpenaggregat mit den im Anspruch 1 angegebenen Merkmalen gelöst. Bevorzugte Ausführungsformen ergeben sich aus den Unteransprüchen, der Beschreibung sowie den Figuren.

Das erfindungsgemäße Pumpenaggregat weist einen Elektromotor auf, welcher in einem Statorgehäuse angeordnet ist. Das Statorgehäuse kann in üblicher Weise mit einem Pumpengehäuse, in welchem das Laufrad der Pumpe angeordnet ist, verbunden sein. An dem Statorgehäuse ist an einer axialen Stirnseite, d. h. vorzugsweise der dem Pumpenaggregat abgewandten Stirnseite, ein Klemmenkasten angeordnet, in welchem die elektrischen Anschlusselemente sowie elektrische bzw. elektronische Bauteile angeordnet sind.

Erfindungsgemäß weist der Klemmenkasten als zentralen Bestandteil ein rohrförmiges Gehäuseteil auf, welches bevorzugt an seinen beiden axialen Stirnseiten offen ausgebildet ist. D. h. das rohrförmige Gehäuseteil weist einen dem Statorgehäuse zugewandte axiale Stirnseite und eine dem Statorgehäuse abgewandte axiale Stirnseite auf, welche vorzugsweise offen ausgebildet sind bzw. Öffnungen aufweisen.

Mit einer ersten axialen Stirnseite wird das rohrförmige Gehäuse direkt an das Statorgehäuse angesetzt, wodurch die an dieser Stirnseite des rohrförmigen Gehäuseteiles vorhandene Öffnung durch das angesetzte Statorgehäuse verschlossen wird. Die entgegengesetzte zweite axiale Stirnseite des rohrförmigen Gehäuseteils ist durch zumindest ein Deckelelement verschlossen. In diesem Deckelelement sind die Bedien- und/oder Anzeigeelemente integriert. Das Deckelelement überdeckt vorzugsweise die gesamte axiale Stirnseite des rohrförmigen Gehäuseteiles, wodurch eine große Fläche zur Anordnung der Bedien- und Anzeigeelemente bereitgestellt wird. Diese axiale Stirnseite ermöglicht eine gut sichtbare und gut zugängliche Anordnung der Bedien- und Anzeigeelemente. An dem rohrförmigen Gehäuseteil ist ferner am Außenumfang ein elektrisches Anschlusselement angeformt. D. h. das Anschlusselement, welches zur Verbindung mit einer elektrischen Anschlussleitung bzw. einem elektrischen Anschluss vorgesehen ist, bildet mit dem Gehäuseteil ein integrales Bauteil.

Die beschriebene Ausgestaltung des Klemmenkastens bestehend aus einem rohrförmigen Gehäuseteil, welches mit einer Seite an das Statorgehäuse angesetzt wird und an der anderen Seite durch ein Deckelelement verschlossen wird, ermöglicht insbesondere bei der beidseitig offenen Ausgestaltung insgesamt eine einfache Montage, da die Zugänglichkeit des Innenraums des Klemmenkastens verbessert ist. So kann beispielsweise die Montage und Anordnung der Bauelemente im Inneren des Klemmenkastens durch die Öffnung, welche von dem Deckelelement verschlossen wird, erfolgen. Dabei kann das Gehäuseteil so konfiguriert sein, dass nach Schließen des Deckelelementes alle im Inneren angeordneten Komponenten dort fest angeordnet sind, so dass ein vorgefertigter Klemmenkasten geschaffen werden kann, auch wenn die zweite axiale Stirnseite noch offen ausgebildet ist. Mit dieser zweiten offenen Stirnseite kann der Klemmenkasten an das Statorgehäuse angesetzt werden, so dass Anschlusskontakte zur Verbindung der Statorspulen durch die Öffnung bzw. Öffnungen an dieser axialen Stirnseite in das Innere des Klemmenkastens, d. h. in das Innere des rohrförmigen Gehäuseteils eindringen können und dort mit elektronischen Bauteilen im Inneren des Klemmenkastens in Kontakt treten können.

Dadurch, dass das Anschlusselement umfangsseitig angeformt ist und sich vorzugsweise in radialer Richtung erstreckt, behindert er nicht die beschriebenen Montagevorgänge des Klemmenkastens. Ferner ist auch später der elektrische Anschluss des gesamten Pumpenaggregates an der Umfangsseite des Klemmenkastens leicht zu bewerkstelligen. Die Stirnseite des Klemmenkastens, an der die Bedien- und Anzeigeelemente angeordnet sind, wird dabei durch den elektrischen Anschluss nicht verdeckt, so dass die Bedienung des Pumpenaggregates nicht beeinträchtigt wird. Besonders bevorzugt ist das Anschlusselement an das rohrförmige Gehäuseteil direkt angeformt , wodurch die Anzahl der Einzelteile verringert und die Montage vereinfacht wird.

Das Anschlusselement dient zum elektrischen Anschluss des Pumpenaggregates. Das Anschlusselement kann vorzugsweise als elektrischer Anschlussstecker, als Anschlussklemme oder auch als Anschlusskabel ausgebildet sein, welche am Außenumfang des rohrförmigen Gehäuseteiles angeordnet sind, bzw. sich aus der Umfangswandung umfangseitig nach außen erstrecken. Dabei ist das Anschlusselement vorzugsweise direkt an das rohrförmige Bauteil angeformt, sodass eine zusätzliche Montage nicht erforderlich ist. So kann eine Anschlussklemme oder ein Anschlussstecker direkt an der Gehäusewandung mit angeformt sein. Ferner ist es beispielsweise möglich, ein Anschlusskabel in das Gehäuse einzugießen.

Das rohrförmige Gehäuseteil ist vorzugsweise aus Kunststoff gefertigt und das Anschlusselement vorzugsweise einstückig an das Gehäuseteil angeformt. So kann das Anschlusselement in einem Arbeitsgang mit dem gesamten rohrförmigen Gehäuseteil, beispielsweise im Spritzguss, gefertigt werden, so dass eine äußerst kostengünstige Herstellung möglich ist.

Das Anschlusselement weist elektrische Kontakte auf, welche in den Kunststoff eingegossen sind und sich in das Innere des rohrförmigen Gehäuseteils hinein erstrecken. Dies ermöglicht es, die elektrischen Kontakte gleich beim Gießen des rohrförmigen Gehäuseteils mit dem Anschlusselement in dieses Anschlusselement einzubringen, so dass weitere Montagevorgänge zur Anordnung der elektrischen Leiter bzw. Kontakte entfallen können. Die elektrischen Kontakte werden beim Gießen des Gehäuses mit dem Anschlusselement in das Werkzeug eingelegt, so dass die Metallteile mit dem Kunststoff direkt umgossen werden. Dadurch wird gleichzeitig eine Abdichtung der elektrischen Kontakte in dem Anschlusselement erreicht. D. h. die elektrischen Kontakte erstrecken sich durch die Gehäusewandung des Klemmenkastens hindurch von der Außenseite zur Innenseite, wobei der Kunststoff der Gehäusewandung direkt dichtend mit den Metallteilen der elektrischen Kontakte in Anlage ist. Die elektrischen Kontakte des Anschlusselementes bzw. deren freien Enden im Inneren des rohrförmigen Gehäuseteils sind so ausgebildet, dass sie direkt mit elektrischen Kontakten an einer im Inneren des Klemmenkastens anzuordnenden Leiterplatte in Kontakt treten können.

Vorzugsweise ist einer der elektrischen Kontakte des Anschlusselementes als Erdungskontakt vorgesehen, wobei dessen im Inneren des rohrförmigen Gehäuseteil liegendes Ende als Steckkontakt ausgebildet ist, welcher mit einem Erdungsanschluss, welcher an dem Statorgehäuse ausgebildet ist, elektrisch leitend in Eingriff ist. Der Steckkontakt kann beispielsweise als sich quer zur Fügerichtung von Statorgehäuse und Klemmenkasten, d. h. im Wesentlichen normal zur Längsachse des Statorgehäuses ersteckender Blechstreifen ausgebildet sein, welcher eine Öffnung aufweist, in welche ein Anschlussstift an dem Statorgehäuse eingreifen kann. In der Öffnung sind vorzugsweise am Rand zungenförmige Federelemente ausgebildet, welche kraftschlüssig mit der Oberfläche des Anschlussstiftes in Eingriff treten und einen elektrischen Kontakt bewerkstelligen. Auf diese Weise kann beim Zusammenfügen von Klemmenkasten und Statorgehäuse auch sehr einfach ein Erdungskontakt zu dem Anschlusselement hin bewerkstelligt werden, ohne dass zusätzliche Verdrahtungen oder Montageschritte erforderlich sind. Der Kontakt wird quasi selbstständig beim Zusammenstecken von Statorgehäuse und Klemmenkasten hergestellt.

An dem rohrförmigen Gehäuseteil ist an seiner dem Statorgehäuse zugewandten Stirnseite bevorzugt zumindest ein Verbindungsstecker angeformt, welcher mit zumindest einer Statorspule verbunden ist. Auch dieser Verbindungsstecker ist vorzugsweise einstückig mit dem rohrförmigen Gehäuseteil gegossen. So wird auch in diesem Bereich die Zahl der Einzelteile und erforderliche Montageschritte reduziert. Durch die Ausbildung der Verbindung zwischen Klemmenkasten und Statorspule als Steckkontakt ist darüber hinaus die Montage des Klemmenkastens und insbesondere die elektrische Verbindung der elektronischen Bauteile im Inneren des Klemmenkastens mit den Statorspulen sehr einfach, da dies einfach durch Anstecken des Klemmenkastens an das Statorgehäuse erfolgen kann, wobei der Verbindungsstecker an dem rohrförmigen Gehäuseteil mit einem korrespondierenden Stecker bzw. einer korrespondierenden Kupplung an dem Stator bzw. Statorgehäuse in Eingriff tritt.

Der Verbindungsstecker weist bevorzugt elektrische Kontakte auf, welcher in das rohrförmige Gehäuseteil eingegossen sind und sich in das Innere des rohrförmigen Gehäuseteils hinein erstrecken. So werden die elektrischen Leiter bzw. Kontakte in dem Verbindungsstecker gleich beim Formen bzw. Gießen des rohrförmigen Gehäuseteils und des Verbindungssteckers in diesen eingebracht, so dass weitere Montageschritte entfallen können. Die elektrischen Kontakte, welche am Verbindungsstecker zum Kontakt mit den Statorspulen vorgesehen sind, erstrecken sich in entgegengesetzter Richtung als elektrische Leiter in das Innere des rohrförmigen Gehäuseteils. Dort sind sie zum Anschluss an eine Leiterplatte mit elektronischen Bauteilen zur Steuerung und/oder Reglung des Elektromotors vorgesehen. Vorzugsweise sind die elektrischen Kontakte dazu im Inneren des rohrförmigen Gehäuseteils ebenfalls als Steckkontakte ausgebildet, welche mit entsprechenden Steckkontakten bzw. Anschlusskupplungen an einer Leiterplatte in Eingriff treten. Auf diese Weise wird eine sehr einfache Verbindung einer Leiterplatte im Inneren des Klemmenkastens mit den elektrischen Anschlüssen der Statorspulen möglich, da diese durch die eingegossenen elektrischen Kontakte in dem rohrförmigen Gehäuseteil bewirkt wird.

Im Inneren des rohrförmigen Gehäuseteils ist eine Leiterplatte mit elektrischen und/oder elektronischen Bauelementen angeordnet, wobei die Leiterplatte sich im Wesentlichen parallel zu den axialen Stirnseiten des rohrförmigen Gehäuseteils sowie des Statorgehäuses erstreckt. Damit erstreckt sich die Leiterplatte im Wesentlichen normal zur Längsachse des Statorgehäuses, welche der Drehachse des Rotors, welcher sich im Inneren des Stators dreht, entspricht. Diese Anordnung sorgt für eine geringe Bauhöhe des gesamten Klemmenkastens, so dass dieser sich flach an die axiale Stirnseite des Statorgehäuses anschließen kann. Vorzugsweise ist die Leiterplatte nahe dem Axialende des Klemmenkastens, welches mit Statorgehäuse abgewandt ist, angeordnet, so dass die elektronischen Bauteile an der Leiterplatte im Wesentlichen zwischen der Leiterplatte und dem Axialende des Statorgehäuses angeordnet sind. Dies hat den Vorteil, dass die entgegengesetzte Seite der Leiterplatte, welche den elektronischen Bauteilen abgewandt ist, zum Anschluss der Bedien- und/oder Anzeigeelemente verwendet werden kann. Auf diese Weise kann die Oberfläche der Leiterplatte optimal ausgenutzt werden.

Weiter bevorzugt ist die Leiterplatte mit Steckkontakten versehen, welche mit den elektrischen Kontakten des Anschlusselementes und/oder den elektrischen Kontakten des zumindest einen Verbindungssteckers elektrisch leitend in Eingriff sind. So können die freien Enden der elektrischen Leiter bzw. Kontakte des Anschlusselementes und/oder Verbindungssteckers, welche im Inneren des rohrförmigen Gehäuseteils gelegen sind, elektrisch leitend mit den Steckkontakten an der Leiterplatte in Eingriff treten. Die freien Enden der Kontakte erstrecken sich dazu vorzugsweise parallel zu Längsachse des Statorgehäuses, d. h. in Fügerichtung des Klemmenkastens, wenn dieser an das Statorgehäuse angesetzt wird. Die Steckkontakte an der Leiterplatte sind dabei so ausgebildet, dass die elektrischen Kontakte von Anschlusselement bzw. Verbindungsstecker in dieser Richtung mit den Steckkontakten in Eingriff treten können. So können alle Bauteile des Klemmenkastens und insbesondere der Klemmenkasten und das Statorgehäuse in derselben Fügerichtung, nämlich in Längsrichtung des Statorgehäuses zusammengesteckt werden, wobei automatisch die elektrischen Kontakte mit den Steckkontakten an der Leiterplatte in Eingriff treten. Hierdurch wird eine sehr einfache Montage ermöglicht.

Bevorzugt sind die Steckkontakte und/oder zumindest ein Teil der elektrischen bzw. der elektronischen Bauelemente an der dem Statorgehäuse zugewandten Oberfläche der Leiterplatte angeordnet.

Besonders bevorzugt sind von den an der dem Statorgehäuse zugewandten Oberfläche der Leiterplatte angeordneten Bauelemente zumindest die Bauelemente mit größerer Bauhöhe derart ringförmig verteilt angeordnet, dass in einem Zentralbereich des rohrförmigen Gehäuseteils von diesen Bauelementen ein Freiraum gelassen wird, in welchen sich ein axiales Ende eines in dem Statorgehäuse angeordneten Spaltrohres erstreckt. D. h. bei dieser Anordnung ist die Leiterplatte vorzugsweise nahe dem dem Statorgehäuse abgewandten Ende des rohrförmigen Bauteils angeordnet und die elektronischen Bauelemente erstrecken sich ausgehend von der Leiterplatte auf das Statorgehäuse zu. Dadurch, dass die Bauelemente mit großer Bauhöhe im Umfangsbereich an der Leiterplatte angeordnet sind, verbleibt im Zentralbereich des rohrförmigen Gehäuseteils vom Statorgehäuse aus gesehen vor der Leiterplatte ein Freiraum, in welchen das axiale Ende des Spaltrohres eingreifen kann. Dies ist insbesondere der Bereich des Spaltrohres, in welchem ein Rotorlager angeordnet ist. Auf diese Weise wird eine kompakte Bauform mit möglichst geringer Ausdehnung in axialer Richtung des Statorgehäuses und des angesetzten Klemmenkastens erreicht.

Das Deckelelement weist bevorzugt an seiner dem Inneren des rohrförmigen Gehäuseteils zugewandten Seite Anschlusskontakte für die Bedien- bzw. Anzeigeelemente auf, wobei die Anschlusskontakte mit korrespondierenden Anschlusskontakten an der Leiterplatte in dem rohrförmigen Gehäuseteil elektrisch leitend in Eingriff sind. Die Anschlusskontakte zwischen Deckelelement und Leiterplatte sind vorzugsweise als Steckkontakte ausgebildet, welche in einer Richtung parallel zur Längsachse des Statorgehäuses, d. h. in der Fügerichtung von rohrförmigem Gehäuseteil und Deckelement, miteinander in Eingriff bringbar sind. So ist es möglich, das Deckelelement einfach in Richtung der Längsachse des Statorgehäuses auf den Klemmenkasten aufzustecken, wodurch gleichzeitig die Anschlusskontakte an dem Deckelelement mit den Anschlusskontakten an der Leiterplatte, welche zuvor im Inneren des rohrförmigen Gehäuseteiles angeordnet wurde, elektrisch leitend in Eingriff gebracht werden.

Das Deckelelement weist bevorzugt eine Trägerplatte auf, welche an ihrer dem rohrförmigen Gehäuseteil abgewandten Oberfläche zumindest teilweise von einer Deckplatte überdeckt ist, in welcher die Oberflächen der Bedienelemente und/oder Fenster für die Anzeigeelemente ausgebildet sind. Die Trägerplatte bildet dabei den eigentlichen Deckel, welcher das rohrförmige Gehäuseteil axialseitig verschließt. Die Deckplatte bzw. Deckschicht bildet die abschließende axiale Oberfläche und enthält die optische Gestaltung der Bedien- und Anzeigeelemente, insbesondere möglicherweise auch Beschriftungen, Typenangaben u. ä. Dabei kann die Deckplatte teilweise transparent ausgebildet sein, um Licht von den dahinterliegenden Anzeigeelementen durchscheinen zu lassen. Die Deckplatte kann z. B. eine Deckfolie sein.

An der dem rohrförmigen Gehäuseteil zugewandten Oberfläche des Deckelelementes oder zwischen der Tragplatte und der Deckplatte ist weiter bevorzugt eine Leiterplatte angeordnet, an welcher die Bedien- und/oder Anzeigeelemente angeordnet und vorzugsweise Anschlusskontakte ausgebildet sind. Diese Leiterplatte dient zum elektrischen Anschluss der Bedien- und Anzeigeelemente und kann darüber hinaus noch weitere elektronische Bauteile, welche insbesondere zum Betrieb der Bedien- und Anzeigeelemente erforderlich sind, tragen. Die Leiterplatte kann an der Innenseite des Deckelelementes, d. h. im Inneren des Klemmenkastens angeordnet sein, wobei dann in der Trägerplatte vorzugsweise Ausnehmungen vorgesehen sind, durch welche Licht von Anzeigeelementen an der Leiterplatte nach außen scheinen kann oder Bedienelemente von außen betätigt werden können. Die Anschlusskontakte sind vorzugsweise an der dem Inneren des rohrförmigen Gehäuseteils zugewandten Seite der Leiterplatte angeordnet und dienen dazu, wie oben beschrieben, mit Anschlusskontakten an der Leiterplatte im Inneren des rohrförmigen Gehäuseteils in Eingriff zu treten. Die Leiterplatte an dem Deckelelement erstreckt sich vorzugsweise normal zur Längsrichtung des Statorgehäuse, d. h. vorzugsweise parallel zu der Leiterplatte im Inneren des rohrförmigen Gehäuseteils. Anstatt die beiden Leiterplatten direkt elektrisch miteinander zu kontaktieren, können auch in dem rohrförmigen Gehäuseteil und/oder dem Deckelelement weitere elektrische Leiter zur Verbindung beider Leiterplatten angeordnet sein.

Alternativ ist es möglich, dass die Leiterplatte an dem Deckelelement an der Außenseite des Trägerelementes angeordnet ist. Dazu ist vorzugsweise an der Außenseite, d. h. der dem Innenraum des rohrförmigen Gehäuseteils abgewandten Seite eine Vertiefung in dem Trägerelement ausgebildet, in welche die Leiterplatte eingesetzt ist. Nach außen wird die Leiterplatte dann von der Deckplatte überdeckt. In diesem Fall ist in dem Trägerelement vorzugsweise eine Ausnehmung vorgesehen, durch welche sich Anschlusskontakte in das Innere des rohrförmigen Gehäuseteils erstrecken können.

Das rohrförmige Gehäuseteil ist mit dem Statorgehäuse vorzugsweise über Rastelemente verbunden. Alternativ oder zusätzlich ist das rohrförmige Gehäuseteil mit dem Deckelelement über Rastelemente verbunden. Dies ermöglicht eine einfache Montage ohne spezielle Werkzeuge.

Das rohrförmige Gehäuseteil weist vorzugsweise einen runden, insbesondere einen kreisförmigen Querschnitt auf. Dabei entspricht der Querschnitt besonders bevorzugt dem Querschnitt am axialen Ende des Statorgehäuses, so dass hier ein harmonischer bzw. glatter Übergang geschaffen werden kann. Die runde Ausgestaltung ermöglicht darüber hinaus eine gute Abdichtung der Schnittstellen zwischen Statorgehäuse und rohrförmigem Gehäuseteil bzw. zwischen rohrförmigem Gehäuseteil und Deckelelement.

Zwischen dem rohrförmigen Gehäuseteil und dem Statorgehäuse und / oder zwischen dem rohrförmigen Gehäuseteil und dem Deckelelement sind vorzugsweise Dichtungen angeordnet, welche den Innenraum des Klemmenkastens nach außen hin abdichten. Besonders bevorzugt sind diese Dichtungen direkt an das rohrförmige Gehäuseteil und / oder das Deckelelement angespritzt. Dies erfolgt vorzugsweise im Zweikomponentenspritzguss direkt bei der Herstellung des Gehäuseteils bzw. des Deckelelements. Als Material kommt für die Dichtungen vorzugsweise Flüssigsilikon (liquid silicone rubber, LSR) zum Einsatz. Dichtungen aus Flüssigsilikon können direkt an die Kunststoffteile des rohrförmigen Gehäuseteils bzw. des Deckelelementes angespritzt werden. Besonders bevorzugt ist ebenfalls die Deckplatte bzw. die Decklage des Deckelelementes bzw. sind die Bedienelemente an dem Deckelelement aus demselben Material wie eine an dem Deckelelement angeordnete Dichtung, vorzugsweise aus Flüssigsilikon ausgebildet. Dies ermöglicht es, die Decklagen bzw. die Bedienelemente in einem Arbeitsgang mit der Dichtung, welche zur Abdichtung zwischen Deckelelement und Statorgehäuse dient, an dem Deckelelement auszubilden. Die Deckplatte überdeckt die Außenseite des Deckelementes vorzugsweise vollständig.

Der Elektromotor weist vorzugsweise einem Stator mit einem Eisenkern auf, welcher beispielsweise aus einer Vielzahl geschichteter Bleche gebildet sein kann und auf dem eine oder mehrere Wicklungen angeordnet sind, je nach Ausbildung des Elektromotors. Dabei kann der Eisenkern einstückig oder mehrteilig ausgebildet sein und umgibt einen zentralen kreisförmigen Freiraum, in welchem der Rotor des Elektromotors angeordnet ist. Zusätzlich kann vorzugsweise ein Spaltrohr angeordnet sein, welches einen fluidgefüllten Rotorraum von dem Stator trennt, wie es bei nasslaufenden Elektromotoren üblich ist. Ferner sind vorzugsweise an dem Eisenkern Wicklungsträger angeordnet, auf welchen die Wicklungen angeordnet sind und welche die Wicklungen gegenüber dem Eisenkern elektrisch isolieren.

Bevorzugt sind der Stator und das Statorgehäuse derart ausgebildet, dass das Statorgehäuse als gegossenes Bauteil gefertigt ist, in welches der Eisenkern direkt eingegossen ist. Dabei kann der Eisenkern als vorgefertigtes Bauteil, beispielsweise aus geschichteten Blechen gebildet sein, welches beim Gießen des Statorgehäuses in das Werkzeug eingesetzt wird und dann beim Gießen vom Material des Statorgehäuses in Teilbereichen umflossen wird, so dass eine form -und/oder stoffschlüssige Verbindung zwischen Statorgehäuse und Eisenkern geschaffen wird. Es entsteht somit beim Gießen des Statorgehäuses durch das gleichzeitige Eingießen des Eisenkerns ein einteiliges Bauteil, welches die Funktion von Statorgehäuse und Eisenkern erfüllt.

Der Stator ist dann vorzugsweise weiter in der Weise gefertigt, dass die Wicklungen erst nach dem Eingießen bzw. Vergießen von Eisenkern und Statorgehäuse auf dem Eisenkern angeordnet werden. D. h. erfindungsgemäß wird zunächst der Eisenkern in dem Statorgehäuse angeordnet, was durch das Eingießen erfolgt, und anschließend werden erst die Wicklungen in den Eisenkern eingesetzt bzw. auf den Eisenkern aufgebracht. Somit entfällt erfindungsgemäß das Einsetzen des Eisenkerns in das Statorgehäuse mit der erforderlichen Fixierung in dem Statorgehäuse nach dem Anordnen der Wicklungen. Durch die einteilige Ausgestaltung von Statorgehäuse und Eisenkern beim Gießen des Statorgehäuses wird die Montage des Stators und des Statorgehäuses deutlich vereinfacht. Ferner wird eine dauerhafte und einfach zu realisierende Fixierung des Eisenkerns im Statorgehäuse erreicht.

Besonders bevorzugt werden die Wicklungen nach dem Eingießen des Eisenkerns in das Statorgehäuse um den Eisenkern gewickelt. D. h. das Wickeln der Wicklungen aus einem oder mehreren Drähten erfolgt erst im Inneren des Statorgehäuses, nachdem der Eisenkern dort durch Eingießen fest angeordnet ist. Dies hat den Vorteil, dass nach dem Wickeln nur noch ein integriertes Bauteil, bestehend aus Stator und Statorgehäuse, besteht, in welchem die Spulen bzw. Wicklungen geschützt angeordnet sind.

Vorzugsweise ist das Statorgehäuse aus Kunststoff als Spritzgussteil gefertigt. In ein solches Spritzgussteil kann der Eisenkern leicht eingegossen werden, indem der Eisenkern vor dem Gießen des Spritzgussteils in das Werkzeug eingelegt wird und der Eisenkern dann in den gewünschten Teilbereichen von dem Kunststoff beim Gießen umflossen wird. Aus Kunststoff kann ein leichtes und trotzdem festes Statorgehäuse geschaffen werden.

Weiter bevorzugt wird durch das Eingießen des Eisenkerns in das Statorgehäuse an dem Eisenkern gleichzeitig ein Spulenträger ausgebildet. Dies bietet sich insbesondere dann an, wenn das Statorgehäuse aus Kunststoff gefertigt wird, da der Spulenträger elektrisch isolierend ausgebildet werden soll. So kann der Spulenträger bzw. können die Spulenträger gleichzeitig mit dem Statorgehäuse gespritzt bzw. gegossen und mit dem Eisenkern verbunden werden, wodurch die Zahl der Einzelteile und Montageschritte erheblich reduziert werden kann.

Das Statorgehäuse ist vorzugsweise rohrförmig mit Öffnungen an beiden axialen Stirnseiten ausgebildet, wobei das Statorgehäuse an einer ersten axialen Stirnseite mit einem Pumpengehäuse verbunden ist und an einer entgegengesetzten zweiten axialen Stirnseite durch einen Deckel oder Klemmenkasten verschlossen ist. Die rohrförmige Ausgestaltung des Statorgehäuses hat den Vorteil, dass das Statorgehäuse mit dem darin fest verbundenen Eisenkern beim Einbringen bzw. Wickeln der Wicklungen im Inneren des Statorgehäuses von beiden Stirnseiten her zugänglich ist, so dass das Einbringen der Wicklungen vereinfacht wird.

Zur Verbindung mit dem Pumpengehäuse sind an dem Statorgehäuse vorzugsweise Befestigungsmittel ausgebildet. Dies können beispielsweise flanschartige Vorsprünge mit Durchgangslöchern sein, durch welche Bolzen oder Schrauben geführt werden, welche die Verbindung zu dem Pumpengehäuse herstellen. Auch zur Befestigung des Deckels oder Klemmenkastens sind vorzugsweise entsprechende Befestigungsmittel vorgesehen. Zwischen Deckel und Statorgehäuse und/oder zwischen Statorgehäuse und Pumpengehäuse können ferner Dichtungen vorgesehen sein, um das Pumpenaggregat und insbesondere das Statorgehäuse nach außen abzudichten. Hierzu können an den Schnittstellen O-Ringe eingelegt oder aber beispielsweise auch Dichtungen direkt fest verbunden an dem Statorgehäuse und/oder dem Deckel bzw. dem Pumpengehäuse ausgebildet sein. Diese Dichtungen können z. B. aus einem geeigneten Material direkt an das entsprechende Gehäuseteil angegossen bzw. angespritzt sein.

Das rohrförmige Statorgehäuse weist besonders bevorzugt einen runden und insbesondere einen kreisförmigen Querschnitt auf, so dass insbesondere auch die offenen Stirnseiten einen runden bzw. kreisförmigen Querschnitt aufweisen. Dies ist für die Abdichtung des Spaltes zwischen Statorgehäuse und Deckel bzw. zwischen Statorgehäuse und Pumpengehäuse von Vorteil, da sich ein runder bzw. kreisförmiger Spalt besser abdichten lässt.

Weiter bevorzugt sind an dem Deckel und dem Klemmenkasten axialseitig Bedien- und/oder Anzeigeelemente angeordnet. Die Bedien- und/oder Anzeigeelemente sind somit an der dem Statorgehäuse abgewandten Außenfläche des Deckels bzw. Klemmenkastens angeordnet und dort von außen gut zugänglich. Darüber hinaus steht hier eine große plane Fläche zur Verfügung, an der die Bedien- und/oder Anzeigeelemente übersichtlich angeordnet werden können.

Weiter bevorzugt ist der Elektromotor als nasslaufender Elektromotor mit einem Spaltrohr ausgebildet. Derartige Elektromotoren sind insbesondere bei Heizungsumwälzpumpen bevorzugt.

Das Spaltrohr ist dabei vorzugsweise in axialer und vorzugsweise auch in radialer Richtung im Bereich der einem Pumpengehäuse zugewandten axialen Stirnseite des Statorgehäuses fixiert. Es ist wichtig, dass das Spaltrohr in definierter Lage im Stator gehalten wird, damit der Rotor sich ungehindert im Inneren des Spaltrohrs drehen kann. Darüber hinaus ist üblicherweise das dem Pumpenaggregat abgewandte Ende des Rotors am axialen Ende des Spaltrohrs in diesem gelagert. So muss das Spaltrohr fixiert sein, um die Lagerkräfte des Rotors aufnehmen zu können. Herkömmlicherweise wird dazu das Spaltrohr an dem dem Pumpenaggregat abgewandten Ende, an dem auch die Rotorlagerung angeordnet ist, im Statorgehäuse fixiert. Erfindungsgemäß wird nun auf diese Fixierung verzichtet und das Spaltrohr nur an dem dem Pumpenaggregat zugewandten Ende fixiert. Hierdurch wird mehr Freiraum an dem dem Pumpenaggregat abgewandten Axialende des Statorgehäuses geschaffen, was die Montage und die Anordnung weiterer Bauteile, wie beispielsweise des Klemmenkastens begünstigt. Darüber hinaus muss an dem dem Pumpenaggregat abgewandten Axialende im Statorgehäuse keine Aufnahme für das Spaltrohr vorgesehen sein, welche in den Innenquerschnitt des Statorgehäuses hineinragen würde. Dies verbessert die Zugänglichkeit des im Statorgehäuse angeordneten Eisenkerns zum Aufbringen der Wicklungen. Zum Fixieren des Spaltrohrs an der dem Pumpengehäuse zugewandten Statorseite kann das Spaltrohr besonders bevorzugt zwischen Pumpengehäuse und Statorgehäuse kraft- und/oder formschlüssig fixiert werden, so dass beim Verbinden von Stator und Pumpengehäuse gleichzeitig eine Fixierung des Spaltrohrs erreicht werden kann.

Vorzugsweise weist das Spaltrohr an seinem dem Pumpengehäuse zugewandten Axialende einen nach außen vorstehenden Kragen auf, welcher zwischen dem Pumpengehäuse und dem Statorgehäuse fixiert, insbesondere eingeklemmt ist. Der Kragen bildet idealerweise einen sich radial nach außen erstreckenden ringförmigen Vorsprung, welcher in einer korrespondierenden Aufnahme zwischen Stator und Pumpengehäuse derart fixiert wird, dass das Spaltrohr in axialer Richtung und vorzugsweise auch in radialer Richtung kraft- und/oder formschlüssig fixiert ist.

Dabei kann das Spaltrohr mit seinem Kragen in axialer und vorzugsweise auch radialer Richtung direkt an einem Aufnahmebereich am axialen Ende des Statorgehäuses anliegen oder an einem im Inneren des Statorgehäuses an dessen axialen Ende angeordneten Zwischenring anliegen. Der Zwischenring ist in die dem Pumpengehäuse zugewandte axiale stirnseitige Öffnung des Statorgehäuses eingesetzt und bildet eine Anlagefläche bzw. Aufnahme für das Spaltrohr. Insbesondere bildet der Zwischenring eine Anlagefläche in axialer Richtung. Weiter bevorzugt ist der Zwischenring jedoch auch so ausgebildet, dass er eine zentrale Öffnung aufweist, welche in ihrem Querschnitt bzw. Durchmesser so dimensioniert ist, dass das Spaltrohr an seinem Außenumfang am Innenumfang der Öffnung des Zwischenringes zur Anlage kommen kann und der Zwischenring für eine Fixierung des Spaltrohres in radialer Richtung sorgt. Der Zwischenring wird in axialer und vorzugsweise auch in radialer Richtung an dem Statorgehäuse fixiert. Dies kann kraftschlüssig, formschlüssig und/oder stoffschlüssig erfolgen. Dabei hat die Anordnung des Zwischenringes den Vorteil, dass beim Einbringen der Wicklungen in das Statorgehäuse auch die dem Pumpengehäuse zugewandte stirnseitige Öffnung des Statorgehäuses vollständig offen sein kann, so dass der Eisenkern auch von dieser Seite besser zugänglich ist. Erst nach dem Einbringen der Wicklungen kann dann der Zwischenring, welcher das Spaltrohr aufnimmt, eingesetzt werden. Alternativ kann ein dem Zwischenring entsprechendes Bauteil einstückig an das Statorgehäuse angeformt sein und den Aufnahmebereich für das Spaltrohr bilden.

Gemäß einer weiteren bevorzugten Ausführungsform der Erfindung ist an dem Statorgehäuse an einer axialen Stirnseite ein Klemmenkasten angeordnet, welcher ein rohrförmiges Gehäuseteil aufweist, das an seinen beiden axialen Stirnseiten offen ausgebildet ist. Dabei ist das rohrförmige Gehäuseteil mit einer ersten offenen axialen Stirnseite an die axiale Stirnseite des Statorgehäuses angesetzt. Die entgegengesetzte zweite axiale Stirnseite des rohrförmigen Gehäuseteils ist durch zumindest ein Deckelelement verschlossen, in welches Bedien- und/oder Anzeigeelemente integriert sind. Ferner ist an dem rohrförmigen Gehäuseteil ein sich radial nach außen erstreckender Anschlussstecker angeformt.

Ferner ist vorzugsweise ein entsprechendes Verfahren zur Herstellung eines Pumpenaggregates gemäß der vorangehenden Beschreibung, insbesondere zur Herstellung eines Stators eines Pumpenaggregates vorgesehen. Gemäß diesem Verfahren erfolgt die Herstellung des Stators in der Weise, dass beim Gießen des Statorgehäuses ein Eisenkern des Stators direkt in das Statorgehäuse eingegossen wird, d. h. vorzugsweise bei der Formgebung des Statorgehäuses in dieses eingebunden wird. Dabei erfolgt das Eingießen des Eisenkerns, bevor die Wicklungen an dem Eisenkern angeordnet werden. Die Wicklungen werden erst nach dem Eingießen des Eisenkerns in das Statorgehäuse auf den Eisenkern aufgebracht, vorzugsweise direkt auf den Eisenkern gewickelt. Das Statorgehäuse ist, wie oben beschrieben, vorzugsweise aus Kunststoff ausbildet und wird im Spritzgussverfahren hergestellt. Dabei ist es sehr einfach möglich, den Eisenkern in den Kunststoff einzugießen, d. h. ganz oder teilweise durch den Kunststoff zu ummanteln. Dabei können gleichzeitig, vorzugsweise aus demselben Material, aus dem auch das Statorgehäuse besteht, Wicklungsträger an den Eisenkern angegossen bzw. angeformt werden, auf welche später die Wicklungen aufgebracht werden. Bezüglich bevorzugter Ausgestaltungen bzw. weiterer bevorzugter Verfahrensschritte bei der Herstellung des Stators bzw. Pumpenaggregats wird auf die vorangehende Beschreibung verwiesen.

Nachfolgend wird die Erfindung beispielhaft anhand der beigefügten Figuren beschrieben. In diesen zeigt:
- Fig. 1: Eine perspektivische Gesamtansicht eines Pumpenaggregates,
- Fig. 2: eine Explosionsansicht des Pumpenaggregates gemäß Fig. 1,
- Fig. 3: eine teilweise geschnittene Explosionsansicht des Statorgehäuses,
- Fig. 4: eine perspektivische Ansicht des Statorgehäuses von der dem Pumpenaggregat abgewandten Seite her gesehen,
- Fig. 5: eine perspektivische Ansicht des Statorgehäuses von der dem Pumpengehäuse zugewandten Seite her gesehen,
- Fig. 6: das Pumpenaggregat gemäß Fig. 1 mit abgenommenen Klemmenkasten,
- Fig. 7: das Pumpenaggregat gemäß Fig. 6 mit Sicht auf die dem Statorgehäuse zugewandte Seite des Klemmenkastens,
- Fig. 8: eine perspektivische Ansicht eines Gehäuseteils des Klemmenkastens,
- Fig. 9: eine Ansicht des Klemmenkastendeckels von der Außenseite her gesehen,
- Fig. 10: eine Ansicht des Klemmenkastendeckels von der Innenseite her gesehen,
- Fig. 11: eine Explosionsansicht des Klemmenkastens von der dem Statorgehäuse zugewandten Seite her gesehen,
- Fig. 12: eine Explosionsansicht des Klemmenkastens gemäß Fig. 11 von der Außenseite her gesehen,
- Fig. 13: eine Explosionsansicht des Klemmenkastendeckels von der Außenseite her gesehen,
- Fig. 14: eine Explosionsansicht des Klemmenkastendeckels von der Innenseite her gesehen und
- Fig. 15: eine Explosionsansicht eines Klemmenkastendeckels gemäß einer zweiten Ausführungsform.

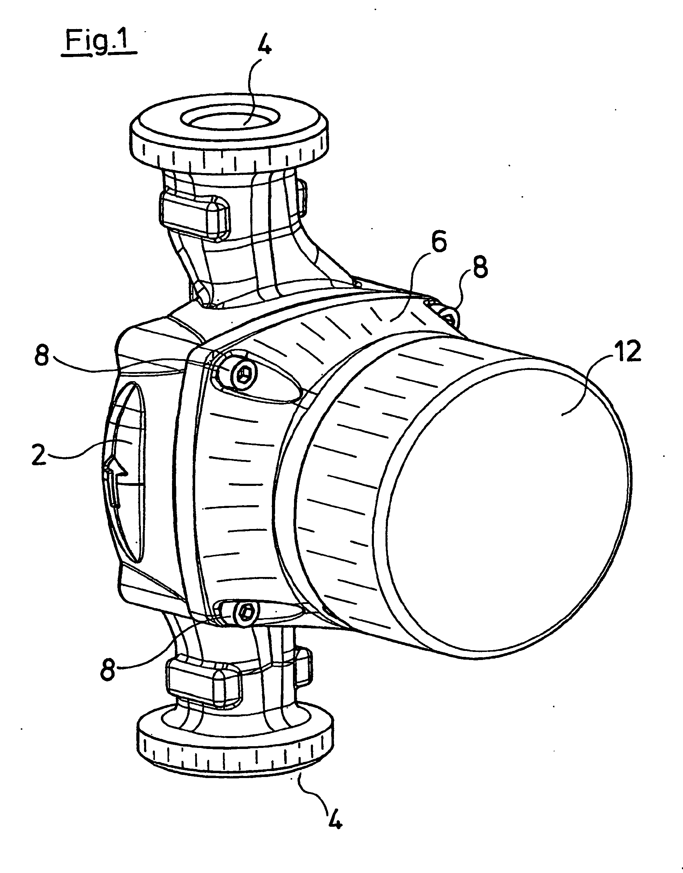

Bei dem nachfolgend beschriebenen Pumpenaggregat handelt es sich um ein Heizungsumwälzpumpenaggregat mit einem nasslaufenden Elektromotor. Das Pumpenaggregat, welches in Fig. 1 im zusammengesetzten Zustand dargestellt ist, weist ein Pumpengehäuse 2 mit den Leitungsanschlüssen 4 zur Anbindung des Pumpenaggregates an eine externe Verrohrung auf. In dem Pumpengehäuse 2 ist in bekannter Weise das Laufrad der Pumpe angeordnet, welches in den beiliegenden Figuren nicht dargestellt ist. An das Pumpengehäuse angesetzt ist ein Statorgehäuse 6, in welchem der elektrische Antrieb, d. h. der Elektromotor des Pumpenaggregates angeordnet ist. Das Statorgehäuse 6 ist über Befestigungsmittel in Form von Schrauben 8, welche sich durch Durchgangslöcher 10 in dem Statorgehäuse 6 erstrecken mit dem Pumpengehäuse 2 verschraubt.

An der dem Pumpengehäuse 2 abgewandten axialen Stirnseite des Statorgehäuses 6 ist ein Klemmenkasten 12 angesetzt. Als axiale Richtung ist dabei die Richtung der Drehachse des Pumpenaggregates zu verstehen, welche sich zentral durch das Statorgehäuse 6 erstreckt. Die Kontaktebenen zwischen Statorgehäuse 6 und Pumpengehäuse 2 sowie zwischen Statorgehäuse 6 und Klemmenkasten 12 erstrecken sich im Wesentlichen normal zu dieser Dreh- bzw. Längsachse X.

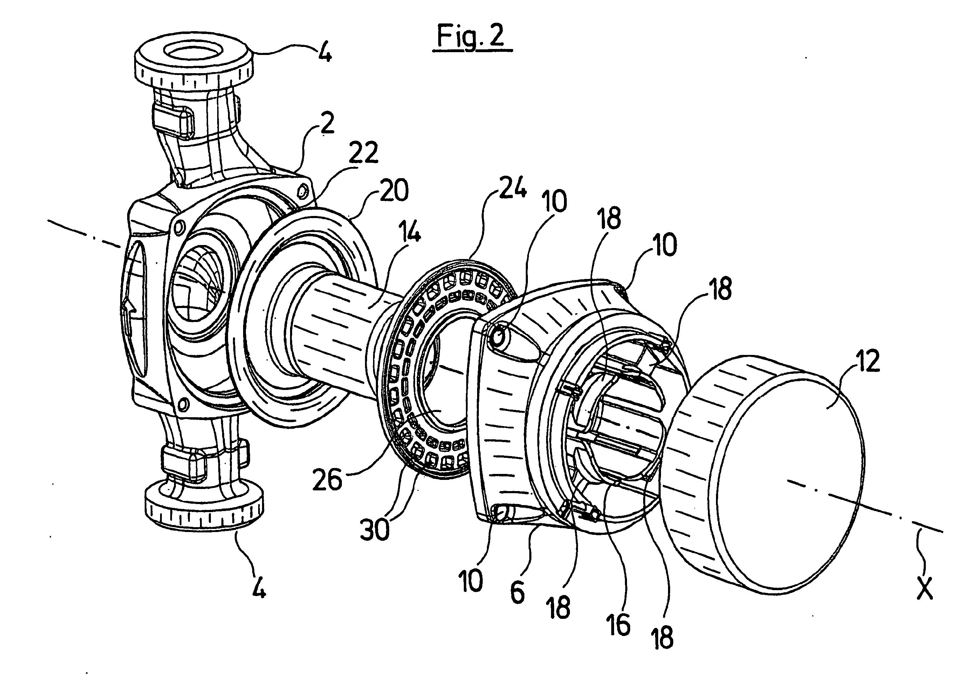

Fig. 2 zeigt in einer Explosionsansicht die wesentlichen Einzelteile des Pumpenaggregates. Dies sind neben dem Pumpengehäuse 2 und dem Statorgehäuse 6 sowie dem Klemmenkasten 2 ein Spaltrohr 14 sowie der im Inneren des Statorgehäuses 6 angeordnete Eisenkern 16 des Stators.

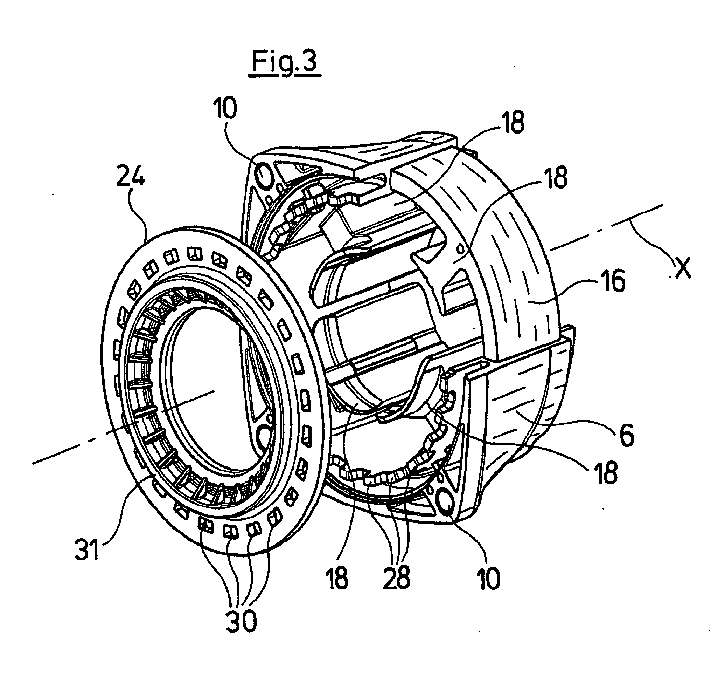

Wie insbesondere in Fig. 3, in welcher das Statorgehäuse 6 teilweise aufgeschnitten gezeigt ist, zu erkennen ist, ist der Eisenkern 16 im Wesentlichen als ringförmiges Bauteil mit sich radial nach innen erstreckenden Polschenkeln 18 ausgebildet. In dem gezeigten Ausführungsbeispiel sind vier solche Polschenkel 18 vorgesehen. Der Eisenkern 16 mit den Polschenkeln 18 kann in bekannter Weise beispielsweise aus geschichteten Blechen ausgebildet sein. Die Polschenkel 18 können einstückig mit dem umgebenden Ring des Eisenkerns 16 ausgebildet sein, es können jedoch auch mehrere Bauteile zusammengesetzt sein.

Der Eisenkern 16 ist mit dem Statorgehäuse 6 durch Eingießen verbunden. Das Statorgehäuse 6 ist aus Kunststoff als Spritzgussteil ausgebildet. Der Eisenkern 16 ist beim Gießen des Statorgehäuses 6 in das Werkzeug eingelegt worden, so dass der Eisenkern 16 von dem Kunststoff des Statorgehäuses 6 umflossen ist und der Eisenkern 16 in das Statorgehäuse 6 eingegossen ist. So liegt insbesondere der kreisförmige äußere Ring des Eisenkerns 16 innerhalb der Umfangswandung des Statorgehäuses 6 und ist vorzugsweise vollständig von dem Kunststoff des Statorgehäuses umschlossen. Auf diese Weise wird gleichzeitig eine elektrische Isolierung geschaffen.

Im aufgebrochenen Bereich in Fig. 3 ist ein Polschenkel 18 freiliegend gezeigt. Die Polschenkel 18 sind jedoch, wie anhand der anderen drei in Fig. 3 sowie den in Figuren 2, 4 und 5 gezeigten Polschenkel zu erkennen ist, ebenfalls mit dem Kunststoffmaterial des Statorgehäuses 6 ummantelt, so dass hier einstückig mit dem Statorgehäuse 6 gleichzeitig auch Spulenträger auf den Polschenkeln 18 ausgebildet sind, welche die anzuordnenden Spulen gegenüber dem Eisenkern 16 elektrisch isolieren. Die Spulen sind in den Figuren nicht gezeigt. Die Spulen werden nach dem Eingießen des Eisenkerns 16 in das Statorgehäuse 6 an dem Eisenkern 16 auf den Polschenkeln 18 angeordnet. Dies erfolgt insbesondere in der Weise, dass die Spulen direkt auf die Polschenkel 18 bzw. die dort ausgebildeten Spulenträger im Inneren des Statorgehäuses 6 gewickelt werden. Dies wird dadurch begünstigt, dass das Statorgehäuse 6 im Wesentlichen rohrförmig und zu beiden axialen Stirnseiten, d. h. zu der dem Pumpengehäuse 2 und zu der dem Klemmenkasten 12 zugewandten Stirnseite hin offen ausgebildet ist, so dass die Polschenkel 18 zum Wickeln der Spulen von beiden Axialseiten her zugänglich sind. Diese Zugänglichkeit wird insbesondere auch dadurch verbessert, dass das Spaltrohr 14 an dem dem Klemmenkasten 12 zugewandten axialen Ende des Statorgehäuses 6 nicht gelagert oder fixiert ist. Die Fixierung des Spaltrohres 14 erfolgt an der dem Pumpengehäuse 2 zugewandten Axialseite des Klemmenkastens 6. Hierzu ist, wie in Fig. 2 zu erkennen ist, an dem dem Pumpengehäuse 2 zugewandten offenen Ende des Spaltrohres 14 ein radial nach außen vorstehender ringförmiger Kragen 20 ausgebildet. Das Spaltrohr 14 mit dem Kragen 20 ist vorzugsweise einstückig, beispielsweise aus rostfreiem Edelstahl oder Kunststoff ausgebildet. Der Kragen 20 bildet eine ringförmige Anlagefläche, welche mit ihrer dem Pumpengehäuse 2 zugewandten Seite an einer ringförmigen Anlagefläche 22 an dem Pumpengehäuse 2 zur Anlage kommt. Dabei kann zwischen dem Kragen 20 und der Anlage 22 eine hier nicht gezeigte Dichtung angeordnet werden.

Zur Fixierung des Spaltrohrs 14 ist ein Zwischenring 24 vorgesehen. Der Zwischenring 24 weist eine zentrale kreisförmige Ausnehmung 26 auf, deren Innenumfang am Außenumfang des Spaltrohres 14 zur Anlage kommt und zur radialen Fixierung des Spaltrohrs in dem Statorgehäuse 6 dient. Der Zwischenring 24 wird formschlüssig an dem Statorgehäuse 6 fixiert. Dazu greifen die in Fig. 3 zu erkennenden entlang einer Kreislinie angeordneten und sich in axialer Richtung erstreckenden Zähne 28, welche in dem Statorgehäuse 6 ausgebildet sind, in korrespondierende Ausnehmungen 30 in dem Zwischenring ein. Der Zwischenring kann auch auf andere Weise an dem Statorgehäuse 6 fixiert werden als durch die einstückig mit dem Statorgehäuse 6 ausgebildeten Zähne 28. An seiner dem Pumpengehäuse 2 zugewandten Seite weist der Zwischenring 24 eine ringförmige Anlagefläche 31 auf, welche an der dem Statorgehäuse 6 zugewandten Seite des Kragens 20 des Spaltrohres 14 zur Anlage kommt. So drückt der Zwischenring 24 mit der Anlagefläche 31 gegen den Kragen 20 und somit den Kragen 20 an die Anlagefläche 22 an dem Pumpengehäuse 2. Der Zwischenring 24 ist durch den Eingriff der Zähne 28 an dem Statorgehäuse 6 fixiert, so dass dieses, wenn es über die Schrauben 8 mit dem Pumpengehäuse 2 verschraubt wird, den Zwischenring 24 gegen den Kragen 20 des Spaltrohres 14 drückt. Auf diese Weise wird das Spaltrohr 14 bei Befestigung des Statorgehäuses 6 an dem Pumpengehäuse 2 zwischen Statorgehäuse 6 und Pumpengehäuse 2 fixiert bzw. eingeklemmt und so über den Kragen 20 an seinen dem Pumpengehäuse 2 zugewandten Ende am Pumpengehäuse 2 und dem Statorgehäuse 6 in axialer Richtung fixiert. Neben dem Zwischenring 24 können auch die ringförmige Anlagefläche 22 bzw. deren umfänglich umgebende Wandung des Pumpengehäuses 2 zur radialen Fixierung des Spaltrohres 14 dienen, indem die umfängliche Kante des Kragens 20 dort zur Anlage kommt.

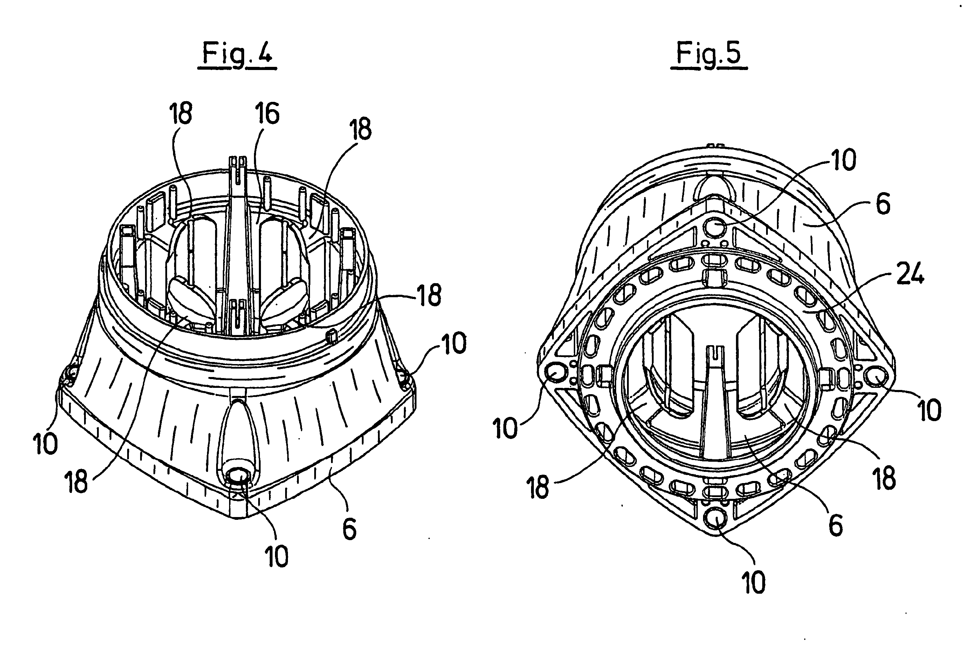

Die Ausbildung des Zwischenringes 24 als separates Bauteil hat den Vorteil, dass die die Polschenkel 18 in dem Stator 6 zunächst frei zugänglich sind, so dass die Wicklungen leicht eingebracht werden können. Nach Einbringen der Wicklungen kann dann der Zwischenring 24 an das Statorgehäuse 6 angesetzt werden, wodurch der ringförmige Raum in dem Statorgehäuse 6, in welchem die Wicklungen angeordnet sind an der dem Pumpengehäuse 2 zugewandten Axialseite durch den Zwischenring 24 zumindest teilweise verschlossen wird. Alternativ ist es auch möglich, den Zwischenring 24 nicht als separates Bauteil, sondern einstückig mit dem Statorgehäuse 6 auszubilden, wie es in Fig. 5 gezeigt ist. Die Ausgestaltung des Statorgehäuses 6, welche in Fig. 5 gezeigt ist, ist ansonsten zu der zuvor Beschriebenen identisch. Nur ist hier das dem Zwischenring 24 entsprechende, einen Aufnahmebereich für das Spaltrohr bildende ringförmige Bauteil einstückig mit dem Statorgehäuse 6 gegossen.

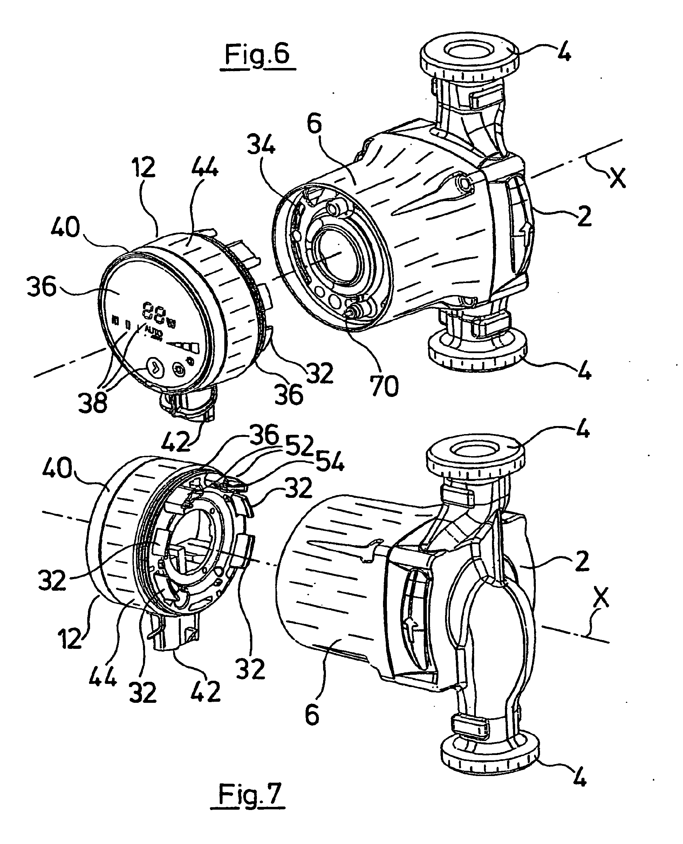

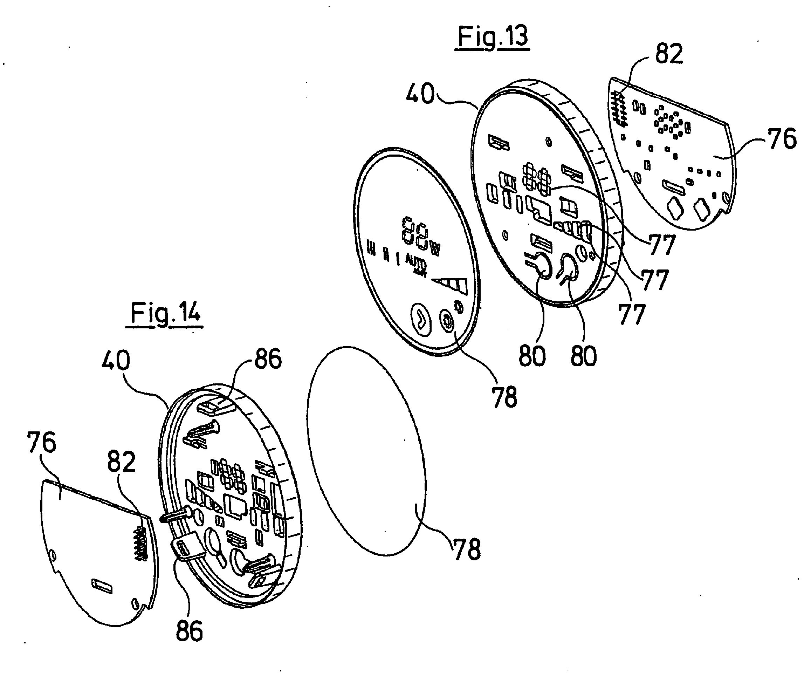

Anhand der Fig. 6 bis 15 wird nun die Ausbildung des Klemmenkastens 12 näher beschrieben.

Der Klemmenkasten 12 ist an das axiale, dem Pumpengehäuse 2 abgewandten Stirnende des Statorgehäuses 6 angesetzt. Dabei wird der Klemmenkasten 12 über Rasthaken 32, welche in axialer Richtung von der dem Statorgehäuse 6 zugewandten Stirnseite auskragen, an korrespondierenden Ausnehmungen 34 in dem Statorgehäuse 6 fixiert. Im Bereich des Außenumfanges des Klemmenkastens 12 ist ein Absatz 36 ausgebildet, welcher in das Innere des Statorgehäuses 6 eingreift und in dessen Bereich eine Dichtung angeordnet ist. Die Dichtung kann direkt an den Klemmkasten 12 angespritzt sein oder es kann sich um eine einzulegende Dichtung, beispielsweise einen O-Ring handeln. Da bei dem beschriebenen Pumpenaggregat sowohl der zwischen Pumpengehäuse 2 und Statorgehäuse 6 abzudichtende Spalt als auch der Spalt zwischen Statorgehäuse 6 und Klemmenkasten 12 kreisringförmig ausgebildet sind, ist hier eine gute Abdeckung möglich. Der Außenumfang des Klemmenkastens 12 entspricht dem Außenumfang des Statorgehäuses 6 an seinem dem Klemmenkasten 12 zugewandte Enden, so dass beim angesetzten Klemmenkasten 12 ein glatter Übergang von Statorgehäuse 6 zu Klemmenkasten 12 ohne Absätze gegeben ist.

An der dem Statorgehäuse 6 abgewandten axialen Stirnfläche 36 des Klemmenkastens 12 sind Bedien- und Anzeigeelemente 38 sowie gegebenenfalls Typenangabe angebracht. Dabei wird die axialseitige Stirnfläche 36 von einem Deckelelement bzw. Deckel 40 gebildet, welcher den Klemmenkasten 12 axialseitig verschließt. Umfänglich ist an dem Klemmenkasten 12 darüber hinaus ein Anschlussstecker 42 als Anschlusselement einstückig mit der Gehäusewandung des Klemmenkastens 12 ausgebildet.

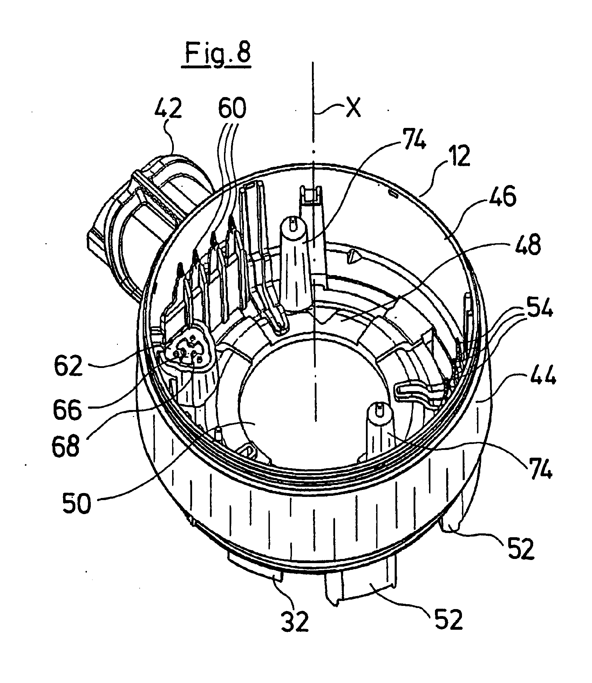

Zentrales Bauteil des Klemmenkastens 12 ist das in Fig. 8 als Einzelteil gezeigte rohrförmige Gehäuseteil 44. Das rohrförmige Gehäuseteil 44 des Klemmenkastens 12 ist ein integrales Bauteil aus Kunststoff, welches im Spritzgussverfahren gefertigt ist. Der Anschlussstecker 42 erstreckt sich ausgehend von der Umfangswandung des Gehäuseteils 44 radial nach außen und ist einstückig mit dem Gehäuseteil 44 ausgebildet. Auch die Rasthaken 32 sind einstückig mit dem Gehäuseteil 44 ausgebildet. An der dem Statorgehäuse 6 abgewandten Stirnseite ist das Gehäuseteil 44 vollständig offen ausgebildet, d. h. weist eine kreisförmige Öffnung 46 auf, welche durch den Deckel 40 verschlossen wird. An der entgegengesetzten, dem Statorgehäuse 6 zugewandten Stirnseite ist an dem rohrförmigen Gehäuseteil 44 ein radial nach innen gerichteter Kragen 48 mit einer zentralen kreisförmigen Öffnung 50 ausgebildet. In diese kreisförmige Öffnung 50 greift das Spaltrohr 14 mit seinem axialen, dem Pumpengehäuse 2 abgewandten Ende ein.

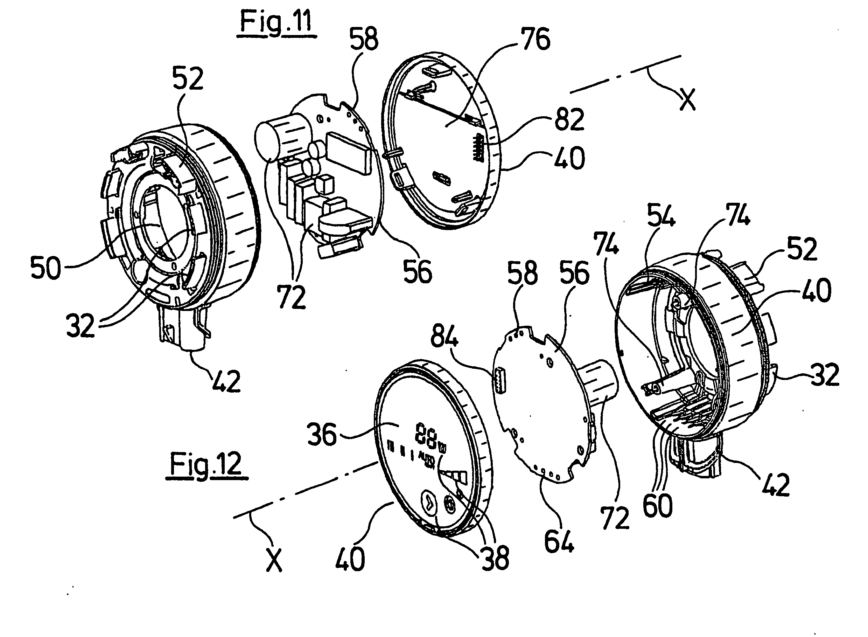

An dem axialen Ende, an welchem der Kragen 48 ausgebildet ist, sind ferner die Rasthaken 32 sowie ein Verbindungsstecker 52 ausgebildet, welche sich ebenfalls in axialer Richtung auf das Statorgehäuse 6 zu erstrecken und im montierten Zustand in dieses eingreifen. Der Verbindungsstecker 52 dient zum Anschluss der Spulen bzw. Wicklungen in dem Statorgehäuse und tritt mit korrespondierenden Kontakten bzw. Steckern im Statorgehäuse 6 in Eingriff, wenn der Klemmenkasten 2 auf das Statorgehäuse 6 aufgesteckt wird. Die Verbindungsstecker 52 weisen elektrische Kontakte bzw. Leiter 54 auf, welche in dem Kunststoff des Bauteils 44 eingegossen sind. Dazu können Metallstreifen, vorzugsweise gestanzte Blechteile, vor dem Spritzgießen des Bauteils 44 in das Werkzeug eingelegt werden, so dass die Leiter 54 dann in den Kunststoff eingegossen sind. Alternativ können die Leiter 54 auch so ausgebildet sein, dass sie nachträglich in das Bauteil 44 eingesetzt bzw. eingesteckt werden. Die Leiter 54 stellen die Verbindung zwischen den Spulen des Stators und einer im Klemmenkasten angeordneten Leiterplatte 56 her, auf welcher die Steuer- bzw. Regelelektronik zum Betrieb des Pumpenaggregates, beispielsweise auch ein Frequenzumrichter, angeordnet ist. Zu dieser Verbindung greifen die Leiter 54 in entsprechende Steck- bzw. Anschlusskontakte 58 an der Leiterplatte 56 ein (siehe Fig. 11 und 12).

Entsprechend weist auch der Anschlussstecker 42 elektrische Kontakte bzw. Leiter 60 und 62 auf, von welchen der Leiter 62 als Erdungskontakt ausgebildet ist. Auch die Leiter 60 und 62 sind in der zuvor beschriebenen Weise wie die Leiter 54 direkt in den Kunststoff des Bauteils 44 eingegossen, so dass auf eine zusätzliche Abdichtung an dem Anschlussstecker 42 zum Innenraum des Bauteils 44 hin verzichtet werden kann. Alternativ ist es auch möglich, die Leiter 60 und 62 als separate Bauteile nachträglich in entsprechende Öffnungen in dem Anschlussstecker 42 einzustecken, wobei dann gegebenenfalls eine separate Dichtung vorgesehen werden muss. Die Leiter 60 erstrecken sich im Inneren des Bauteils 44 wie auch die Leiter 54 mit ihren freien Axialenden in axialer Richtung X und dienen zum elektrischen Anschluss der Leiterplatte 56, an welcher entsprechende Steck- bzw. Anschlusskontakte 64 ausgebildet sind, in welche die Leiter 60 mit ihren freien Enden eingreifen können (siehe Fig. 12).

Der Erdungskontakt 62 ist so ausgebildet, dass sein dem Anschlussstecker 42 abgewandtes freies Ende derart abgewinkelt ist, dass es sich in einer Ebene normal zur Längsachse X erstreckt. In diesem Bereich ist der Erdungskontakt so ausgebildet, dass er eine Öffnung 66 aufweist, welche von drei umgebenden Zungen 68 umgeben ist. Bei der Montage des Klemmenkastens tritt in diese Öffnung ein Erdungsanschluss in Form eines Kontaktstiftes 70, welcher im Stator bzw. Statorgehäuse 6 angeordnet ist und sich ebenfalls in axialer Richtung erstreckt, ein. Dabei treten die Zungen 68 mit der Umfangswandung des Kontaktstiftes 70 in Kontakt. Die Zungen 68 werden dabei federnd ausgelenkt, so dass eine sichere Anlage und ein zuverlässiger Kontakt zwischen dem Erdungskontakt 62 und dem Kontaktstift 70 gegeben ist.

In das Gehäuseteil 44 wird, wie in Fig. 11 und 12 dargestellt ist, die Leiterplatte 56 mit den darauf angeordneten elektronischen Bauteilen 72 eingesetzt. Die Leiterplatte wird dabei durch die Öffnung 46, welche durch den Deckel 40 verschlossen wird, in den Innenraum des Klemmenkastens 12 eingesetzt. Die Leiterplatte kommt auf den säulenförmigen Vorsprüngen 74, welche ebenfalls einstückig mit dem Gehäuseteil 44 (siehe Fig. 8) ausgebildet sind, zu liegen. Diese säulenförmigen Vorsprünge 74 halten die Leiterplatte beabstandet zu dem Kragen 48, so dass die elektronischen Bauteile 72 auf der Leiterplatte zwischen der Leiterplatte und dem Kragen 48 im Inneren des Klemmenkastens angeordnet sind. D. h. die Leiterplatte 56 liegt in ihrem eingebauten Zustand an dem dem Deckel 40 zugewandten Axialende des Klemmenkastens. Entsprechend sind auch die freien Enden der elektrischen Leiter 54 und 60 im Inneren des Bauteils 44 so platziert, dass sie in der entsprechenden Position in die Anschlusskontakte 58 und 64 an der Leiterplatte eingreifen. Die elektronischen Bauteile 72 sind auf der Leiterplatte so verteilt, dass diejenigen Bauteile mit einer großen Bauhöhe im Umfangsbereich angeordnet sind, so dass sie nicht in den axial oberhalb der Öffnung 50 gelegenen Raum des Klemmenkastens 12 hineinragen. Dieser Raum bleibt somit frei, so dass hier das axiale Ende des Spaltrohrs 14 in den Klemmenkasten hineinragen kann.

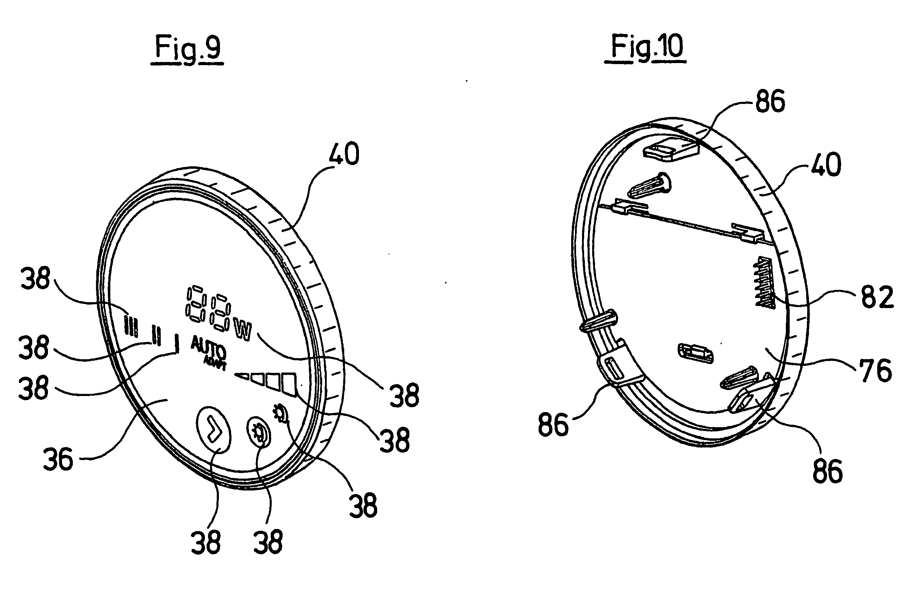

In dem in Fig. 9, 10 und 13 bis 15 näher gezeigten Deckelelement bzw. Deckel 40 ist eine weitere Leiterplatte 76 angeordnet, auf welcher die Bedien- und Anzeigeelemente 38 sowie zu deren Betrieb erforderliche Bauelemente angeordnet sind. Auf dieser Leiterplatte 76 ist die Verdrahtung der Bedien- und Anzeigeelemente 38 ausgebildet. Die Bedien- und Anzeigeelemente 38 können beispielsweise LED, welche in SMD-Technik montiert sind, beinhalten. Bei dem in Fig. 9 bis 14 gezeigten Beispielen ist die Leiterplatte 76 an der Innenseite des Deckels vorzugsweise durch Rastelemente befestigt. Für die Anzeigeelemente sind in dem Deckel 40 Durchbrechungen 77 vorgesehen. Alternativ kann der Deckel 40 auch transparent ausgebildet sein. An seiner Außenseite, d. h. seiner dem Gehäuseteil 44 abgewandten Seite, ist der Deckel 40 durch eine Deckfolie 78 überdeckt, welche die eigentliche Stirnfläche 36 bildet. Diese Deckfolie verschließt die Durchbrechungen 77 und weist die erforderlichen Beschriftungen auf. In dem Deckel 40 sind ferner einstückig Federelemente 80 für die Betätigungselemente ausgebildet. Die Deckfolie 80 ist entsprechend elastisch ausgebildet, so dass die Federelemente 80 durch die Deckfolie 48 hindurchgedrückt werden können. Die Federelemente 80 drücken dann auf entsprechende Schalt- oder Kontaktelemente an der Leiterplatte 76. Zur elektrischen Verbindung der Leiterplatte 76 mit der Leiterplatte 56 sind an der Leiterplatte 76 elektrische Anschlusskontakte in Form axial vorstehender Stifte ausgebildet. Die Anschlusskontakte 82 sind mit korrespondierenden Anschlusskontakten bzw. Anschlussbuchsen 84 an der Leiterplatte 56 elektrisch leitend in Eingriff. Dies ermöglicht es, dass der Deckel 40 nach dem Einsetzen der Leiterplatte 56 in das Bauteil 40 einfach auf das Bauteil 40 aufgesteckt werden kann. Dabei treten dann die Anschlusskontakte 82 und 84 zwischen der zuvor im Deckel montierten Leiterplatte 76 und der Leiterplatte 56 elektrisch leitend in Eingriff. Dies ermöglicht somit eine sehr einfache Montage des Klemmenkastens, da alle Bauteile in derselben Axialrichtung X zusammengesteckt werden.

Die Befestigung des Deckels 40 an dem Gehäuseteil 44 erfolgt in einfacher Weise über Rastelemente 86. So ist eine einfache Montage ohne Schrauben oder ähnliches möglich.

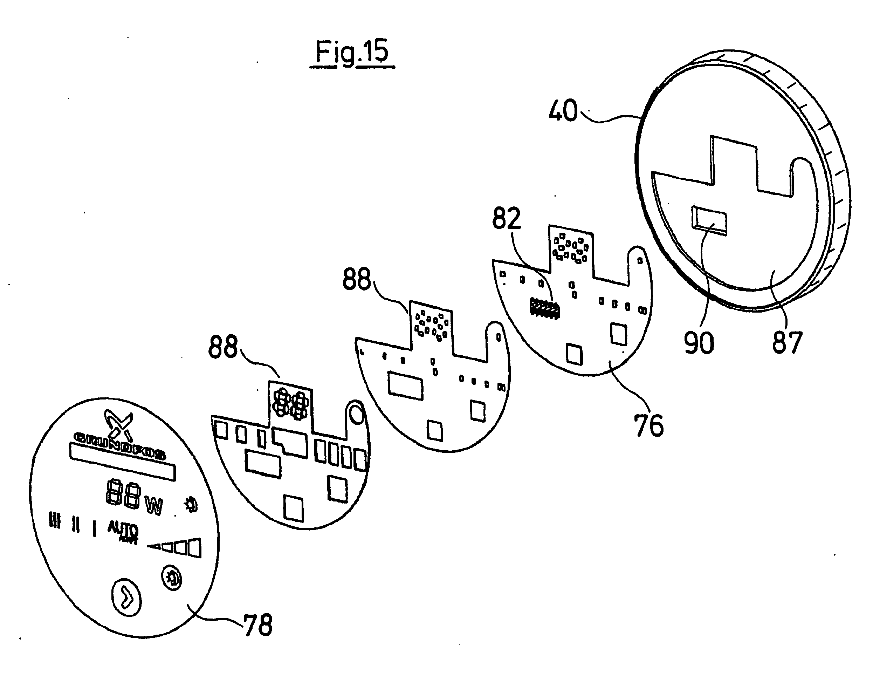

Fig. 15 zeigt eine alternative Ausführungsform des Deckels, bei welcher die Leiterplatte 76 nicht an der Innenseite des Deckels 40, sondern in einer Vertiefung 87 an der Außenseite des Deckels 40 angeordnet ist. Über der Leiterplatte 76 liegen noch Zwischenlagen 88. Nach außen wird die Vertiefung 87 dann durch die Deckfolie 78 verschlossen bzw. überdeckt. Für die Anschlusskontakte 82 an der Leiterplatte 76 ist in dem Deckel 40 eine Ausnehmung 90 vorgesehen, durch welche sich die Anschlusskontakte 82 zur Innenseite des Deckels 40 erstrecken, um mit den Anschlusskontakten 84 eine Leiterplatte 56 in Eingriff treten zu können.

### Bezugszeichenliste

- 2: Pumpengehäuse
- 4: Leitungsanschlüsse
- 6: Statorgehäuse
- 8: Schrauben
- 10: Durchgangslöcher
- 12: Klemmenkasten
- 14: Spaltrohr
- 16: Eisenkern
- 18: Polschenkel
- 20: Kragen
- 22: Anlagefläche
- 24: Zwischenring
- 26: Ausnehmung
- 28: Zähne
- 30: Ausnehmung
- 31: ringförmige Anlagefläche
- 32: Rasthaken
- 34: Ausnehmungen
- 36: Stirnfläche
- 38: Bedien- und Anzeigeelemente
- 40: Deckel
- 42: Anschlussstecker
- 44: Gehäuseteil
- 46: Öffnung
- 48: Kragen
- 50: Öffnung
- 52: Verbindungsstecker
- 54: Leiter
- 56: Leiterplatte
- 58: Anschlusskontakte
- 60: Leiter
- 62: Erdungskontakt
- 64: Anschlusskontakte
- 66: Öffnung
- 68: Zungen
- 70: Kontaktstift
- 72: elektronische Bauteile
- 74: Vorsprünge
- 76: Leiterplatte
- 77: Durchbrechung
- 78: Deckfolie
- 80: Federelemente
- 82, 84: Anschlusskontakte
- 86: Rastelemente
- 87: Vertiefung
- 88: Zwischenlagen
- 90: Ausnehmung
- X: Längsachse

## Patentansprüche

1. Pumpenaggregat mit einem Elektromotor, welcher in einem Statorgehäuse (6) angeordnet ist, wobei an dem Statorgehäuse (6) an einer axialen Stirnseite ein Klemmenkasten angeordnet ist, wobei
der Klemmenkasten (12) ein rohrförmiges Gehäuseteil (44) aufweist,
das rohrförmige Gehäuseteil (44) mit einer ersten axialen Stirnseite an die axiale Stirnseite des Statorgehäuses (6) angesetzt ist,
die entgegengesetzte zweite axiale Stirnseite (46) des rohrförmigen Gehäuseteils (44) durch zumindest ein Deckelelement (40) verschlossen ist, in welches Bedien- und/oder Anzeigeelemente (38) integriert sind,
an dem rohrförmigen Gehäuseteil (44) am Außenumfang ein elektrisches Anschlusselement (42) angeordnet ist,
das Anschlusselement (42) elektrische Kontakte (60) aufweist, welche in den Kunststoff eingegossen sind und sich in das Innere des rohrförmigen Gehäuseteils (44) hinein erstrecken, im Inneren des rohrförmigen Gehäuseteils (44) eine Leiterplatte (56) mit elektrischen und/oder elektronischen Bauelementen (72) angeordnet ist, wobei die Leiterplatte (56) sich im Wesentlichen parallel zu den axialen Stirnseiten des rohrförmigen Gehäuseteils (44) sowie des Statorgehäuses (6) erstreckt, und die Leiterplatte (56) mit Anschlusskontakten (58, 64) versehen ist, in welche die elektrischen Kontakte (60) des Anschlusselementes (42) eingreifen.

2. Pumpenaggregat nach Anspruch 1, **dadurch gekennzeichnet, dass** das Anschlusselement (42) ein Anschlussstecker, eine Anschlussklemme oder ein Anschlusskabel ist.

3. Pumpenaggregat nach Anspruch 1 oder 2, **dadurch gekennzeichnet, dass** das rohrförmige Gehäuseteil (44) aus Kunststoff gefertigt und der Anschlussstecker (42) vorzugsweise einstückig an das Gehäuseteil (44) angeformt ist.

4. Pumpenaggregat nach einem der vorangehenden Ansprüche, **dadurch gekennzeichnet, dass** einer der elektrischen Kontakte (54) als Erdungskontakt (62) vorgesehen ist, wobei dessen im Inneren des rohrförmigen Gehäuseteils (44) liegendes Ende als Steckkontakt ausgebildet ist, welcher mit einem Erdungsanschluss (70), welcher an dem Statorgehäuse (6) ausgebildet ist, elektrisch leitend in Eingriff ist.

5. Pumpenaggregat nach einem der vorangehenden Ansprüche, **dadurch gekennzeichnet, dass** an dem rohrförmigen Gehäuseteil (44) an seiner dem Statorgehäuse (6) zugewandten Stirnseite zumindest ein Verbindungsstecker (52) angeformt ist, welcher mit zumindest einer Statorspule verbunden ist.

6. Pumpenaggregat nach Anspruch 5, **dadurch gekennzeichnet, dass** der Verbindungsstecker (52) elektrische Kontakte (54) aufweist, welche in das rohrförmige Gehäuseteil (44) eingegossen sind und sich in das Innere des rohrförmigen Gehäuseteils (44) hinein erstrecken.

7. Pumpenaggregat nach Anspruch 6, **dadurch gekennzeichnet, dass** die Leiterplatte (56) mit Anschlusskontakten (58, 64) versehen ist, welche mit den elektrischen Kontakten (54) des zumindest einen Verbindungssteckers (52) elektrisch leitend in Eingriff sind.

8. Pumpenaggregat nach einem der vorangehenden Ansprüche **dadurch gekennzeichnet, dass** die Leiterplatte (56) mit Steckkontakten (58, 64) versehen ist, welche mit den elektrischen Kontakten (60) des Anschlusselementes (42) und/oder den elektrischen Kontakten (54) des zumindest einen Verbindungssteckers (52) elektrisch leitend in Eingriff sind.

9. Pumpenaggregat nach Anspruch 1, **dadurch gekennzeichnet, dass** die Steckkontakte (58, 64) und/oder zumindest ein Teil der elektrischen bzw. elektronischen Bauelemente (72) an der dem Statorgehäuse (6) zugewandten Oberfläche der Leiterplatte (56) angeordnet sind.

10. Pumpenaggregat nach Anspruch 8, **dadurch gekennzeichnet, dass** von den an der dem Statorgehäuse (6) zugewandten Oberfläche der Leiterplatte (56) angeordneten Bauelementen (72) zumindest die Bauelemente (72) mit größerer Bauhöhe derart ringförmig verteilt angeordnet sind, dass in einem Zentralbereich des rohrförmigen Gehäuseteils (44) von diesen Bauelementen (72) ein Freiraum gelassen wird, in welchen sich ein axiales Ende eines in dem Statorgehäuse (6) angeordneten Spaltrohres (14) erstreckt.

11. Pumpenaggregat nach einem der vorangehenden Ansprüche, **dadurch gekennzeichnet, dass** das Deckelelement (40) an seiner dem Inneren des rohrförmigen Gehäuseteils (44) zugewandten Seite Anschlusskontakte für die Bedien- bzw. Anzeigelemente (38) aufweist, wobei die Anschlusskontakte (82) mit korrespondierenden Anschlusskontakten (84) an der Leiterplatte (56) in dem rohrförmigen Gehäuseteil (44) elektrisch leitend in Eingriff sind.

12. Pumpenaggregat nach einem der vorangehenden Ansprüche, **dadurch gekennzeichnet, dass** das Deckelelement (40) eine Trägerplatte (40) aufweist, welche an ihrer dem rohrförmigen Gehäuseteil abgewandten Oberfläche zumindest teilweise von einer Deckplatte (78) überdeckt ist, in welcher die Oberflächen der Bedienelemente und/oder Fenster für die Anzeigeelemente ausgebildet sind.

13. Pumpenaggregat nach Anspruch 11, **dadurch gekennzeichnet, dass** an der dem rohrförmigen Gehäuseteil (44) zugewandten Oberfläche des Deckelelementes (40) oder zwischen der Tragplatte (40) und der Deckplatte (78) eine Leiterplatte (76) angeordnet ist, an welcher die Bedien- und/oder Anzeigeelemente (38) angeordnet und vorzugsweise Anschlusskontakte (82) ausgebildet sind.

14. Pumpenaggregat nach einem der vorangehenden Ansprüche, **dadurch gekennzeichnet, dass** das rohrförmige Gehäuseteil (44) mit dem Statorgehäuse (6) und/oder das rohrförmige Gehäuseteil (44) mit dem Deckelelement (40) über Rastelemente verbunden sind.

15. Pumpenaggregat nach einem der vorangehenden Ansprüche, **dadurch gekennzeichnet, dass** das rohrförmige Gehäuseteil (44) einen runden, insbesondere kreisförmigen Querschnitt aufweist.

16. Pumpenaggregat nach einem der vorangehenden Ansprüche, **dadurch gekennzeichnet, dass** der Elektromotor einen Stator mit einem Eisenkern (16) und darauf angeordneten Wicklungen aufweist, wobei das Statorgehäuse (6) als gegossenes Bauteil ausgebildet ist, in welches der Eisenkern (16) eingegeossen ist, und die Wicklungen nach dem Eingießen des Einsenkems (16) in das Statorgehäuse (6) auf den Eisenkern (16) aufgebracht worden sind.

## Claims

1. A pump assembly with an electric motor, which is arranged in a stator housing (6), wherein a terminal box is arranged on the stator housing (6) on an axial face side,
wherein
the terminal box (12) comprises a tubular housing part (44),
the tubular housing part (44) is applied with a first axial face side onto the axial face side of the stator housing (6),
the opposite, second axial face side (46) of the tubular housing part (44) is closed by way of at least one cover element (40), into which operating elements and/or display elements (38) are integrated, and
an electrical connection element (42) is arranged on the tubular housing part (44) on the outer periphery,
the connection element (42) comprises electrical contacts (60) which are moulded into the plastic and which extend into the inside of the tubular housing part (44), a circuit board (56) with electrical and/or electronic components (72) is arranged in the inside of the tubular housing part (44), wherein the circuit board (56) extends essentially parallel to the axial face sides of the tubular housing part (44) as well as of the stator housing (6), and the circuit board (56) is provided with connection contacts (58, 64), into which the electrical contacts (60) of the connection element (42) engage.

2. A pump assembly according to claim 1, **characterised in that** the connection element (42) is a connection plug, a connection terminal or a connection cable.

3. A pump assembly according to claim 1 or 2, **characterised in that** the tubular housing part (44) is manufactured of plastic, and the connection plug (42) is integrally formed on the housing part (44), preferably as one piece.

4. A pump assembly according to one of the preceding claims, **characterised in that** one of the electrical contacts (54) is provided as an earthing contact (62), wherein its end which lies in the inside of the tubular housing (44) is designed as a plug-in contact which is electrically conductively engaged with an earthing connection (70) formed on the stator housing (6).

5. A pump assembly according to one of the preceding claims, **characterised in that** at least one connecting plug (52) connected to at least one stator coil is integrally formed on the tubular housing part (44) at its face side facing the stator housing (6).

6. A pump assembly according to claim 5, **characterised in that** the connecting plug (52) comprises electrical contacts (54) which are moulded into the tubular housing part (44) and which extend into the inside of the tubular housing part (44).

7. A pump assembly according to claim 6, **characterised in that** the circuit board (56) is provided with connection contacts (58, 64) which are in electrically conductive engagement with the electrical contacts (54) of the at least one connecting plug (52).

8. A pump assembly according to one of the preceding claims, **characterised in that** the circuit board (56) is provided with plug-in contacts (58, 64) which are in electrically conductive engagement with the electrical contacts (60) of the connection element (42) and/or the electrical contacts (54) of the at least one connecting plug (52).

9. A pump assembly according to claim 1, **characterised in that** the plug-in contacts (58, 64) and/or at least a part of the electrical or electronic components (72) are arranged on the surface of the circuit board (56) which faces the stator housing (6).

10. A pump assembly according to claim 8, **characterised in that** of the components (72) arranged on the surface of the circuit board (56) which faces the stator housing (6), at least the components (72) with the greatest construction height are arranged distributed in an annular manner such that a free space is left by these components (72) in a central region of the tubular housing part (44), into which free space an axial end of a can (14) arranged in the stator housing (6) extends.

11. A pump assembly according to one of the preceding claims, **characterised in that** the cover element (40) on its side which faces the inside of the tubular housing part (44), comprises connection contacts for the display elements or operating elements (38), wherein the connection contacts (82) are in electrically conductive engagement with corresponding connection contacts (84) on the circuit board (56) in the tubular housing part (44).

12. A pump assembly according to one of the preceding claims, **characterised in that** the cover element (40) comprises a carrier plate (40) which, on its surface which is away from the tubular housing part, is covered at least partly by a cover plate (78), in which the surfaces of the operating elements and/or windows for the display elements are formed.

13. A pump assembly according to claim 11, **characterised in that** a circuit board (76) is arranged on the surface of the cover element (40) which faces the tubular housing part (44) or is arranged between the carrier plate (40) and the cover plate (78), on which circuit board the operating elements and/or display elements (38) are arranged and preferably connection contacts (82) are formed.

14. A pump assembly according to one of the preceding claims, **characterised in that** the tubular housing part (44) is connected to the stator housing (6), and/or the tubular housing part (44) is connected to the cover element (40), via catch elements.

15. A pump assembly according to one of the preceding claims, **characterised in that** the tubular housing part (44) comprises a round, in particular circular cross section.

16. A pump assembly according to one of the preceding claims, **characterised in that** the electric motor comprises a stator with an iron core (16) and windings which are arranged thereon, wherein the stator housing (6) is designed as a cast component, into which the iron core (16) is cast, and the windings are deposited onto the iron core (16) after the casting of the iron core (16) into the stator housing (6).

## Revendications

1. Unité de pompage comprenant un moteur électrique, lequel est disposé dans un carter de stator (6), une boîte à bornes étant disposée sur une face avant axiale du carter de stator (6),
dans laquelle
la boîte à bornes (12) présente une partie de boîtier tubulaire (44),
une première face avant axiale de la partie de boîtier tubulaire (44) est appliquée contre la face avant axiale du carter de stator (6),
la deuxième face avant axiale (46) opposée de la partie de boîtier tubulaire (44) est fermée par au moins un élément de couvercle (40), dans lequel sont intégrés des éléments de commande et/ou d'affichage (38), et
un élément de raccordement électrique (42) est disposé sur la périphérie extérieure de la partie de boîtier tubulaire (44), l'élément de raccordement (42) présente des contacts électriques (60) qui sont noyés dans la matière plastique et s'étendent jusqu'à l'intérieur de la partie de boîtier tubulaire (44),
à l'intérieur de la partie de boîtier tubulaire (44) est disposée une carte de circuits imprimés (56) comportant des composants électriques et/ou électroniques (72), la carte de circuits imprimés (56) s'étendant de manière sensiblement parallèle aux faces avant axiales de la partie de boîtier tubulaire (44) ainsi que du carter de stator (6), et la carte de circuits imprimés (56) étant pourvue de contacts enfichables (58, 64) qui sont en prise avec les contacts électriques (60) de l'élément de raccordement (42).

2. Unité de pompage selon la revendication 1, **caractérisée en ce que** l'élément de raccordement (42) est une fiche de raccordement, une borne de connexion ou un câble de raccordement.

3. Unité de pompage selon la revendication 1 ou 2, **caractérisée en ce que** la partie de boîtier tubulaire (44) est réalisée en matière plastique et la fiche de raccordement (42) est formée, de préférence d'une seule pièce, sur la partie de boîtier (44).

4. Unité de pompage selon l'une des revendications précédentes, **caractérisée en ce que** l'un des contacts électriques (54) est prévu en tant que contact de mise à la terre (62), son extrémité située à l'intérieur de la partie de boîtier tubulaire (44) étant réalisée sous forme de contact enfichable, lequel est en prise de façon électro-conductrice avec une liaison à la terre (70) formée sur le carter de stator (6).

5. Unité de pompage selon l'une des revendications précédentes,, **caractérisée en ce qu'**est formée sur la partie de boîtier tubulaire (44), sur sa face avant orientée vers le carter du stator (6), au moins une fiche de connexion (52) reliée à au moins une bobine de stator.

6. Unité de pompage selon la revendication 5, **caractérisée en ce que** la fiche de connexion (52) présente des contacts électriques (54) qui sont noyés dans la matière plastique et s'étendent jusqu'à l'intérieur de la partie de boîtier tubulaire (44).

7. Unité de pompage selon la revendication 6, **caractérisée en ce que** la carte de circuits imprimés (56) est pourvue de contacts enfichables (58, 64) qui sont en prise de façon électro-conductrice avec les contacts électriques (54) de la au moins une fiche de connexion (52).

8. Unité de pompage selon l'une des revendications précédentes, **caractérisée en ce que** la carte de circuits imprimés (56) est pourvue de contacts enfichables (58, 64) qui sont en prise de façon électro-conductrice avec les contacts électriques (60) de l'élément de raccordement (42) et/ou les contacts électriques (54) de la au moins une fiche de connexion (52).

9. Unité de pompage selon la revendication 1, **caractérisée en ce que** les contacts enfichables (58, 64) et/ou au moins une partie des composants électriques ou électroniques (72) sont disposés sur la surface de la carte de circuits imprimés (56) orientée vers le carter de stator (6).

10. Unité de pompage selon la revendication 8, **caractérisée en ce que**, parmi les composants (72) disposés sur la surface de la carte de circuits imprimés (56) orientée vers le carter de stator (6), au moins les composants (72) ayant un encombrement en hauteur plus important sont disposés selon une répartition annulaire de façon telle que, dans une région centrale de la partie de boîtier tubulaire (44), ces composants (72) laissent un espace libre dans lequel s'étend une extrémité axiale d'une gaine (14) disposée dans le carter de stator (6).

11. Unité de pompage selon l'une des revendications précédentes, **caractérisée en ce que** l'élément de couvercle (40) présente, sur sa face orientée vers l'intérieur de la partie de boîtier tubulaire (44), des plots de connexion pour les éléments de commande ou d'affichage (38), les plots de connexion (82) étant en prise de façon électro-conductrice avec des plots de connexion (84) correspondants sur la carte de circuits imprimés (56) dans la partie de boîtier tubulaire (44).

12. Unité de pompage selon l'une des revendications précédentes, **caractérisée en ce que** l'élément de couvercle (40) présente une plaque support (40) qui, sur sa surface opposée à la partie de boîtier tubulaire, est au moins partiellement recouverte d'une plaque de recouvrement (78) dans laquelle sont réalisées les surfaces des éléments de commande et/ou des fenêtres pour les éléments d'affichage.

13. Unité de pompage selon la revendication 11, **caractérisée en ce qu'**est disposée, sur la surface de l'élément de couvercle (40) orientée vers la partie de boîtier tubulaire (44) ou entre la plaque support (40) et la plaque de recouvrement (78), une carte de circuits imprimés (76) sur laquelle sont disposés les éléments de commande et/ou d'affichage (38) et sont réalisés, de préférence, des plots de connexion (82).

14. Unité de pompage selon l'une des revendications précédentes, caractérisée en ce la partie de boîtier tubulaire (44) est reliée au carter de stator (6) et/ou la partie de boîtier tubulaire (44) est reliée à l'élément de couvercle (40) par l'intermédiaire d'éléments d'encliquetage.

15. Unité de pompage selon l'une des revendications précédentes, **caractérisée en ce que** la partie de boîtier tubulaire (44) présente une section transversale ronde, in particulier circulaire.

16. Unité de pompage selon l'une des revendications précédentes, **caractérisée en ce que** le moteur électrique présente un stator pourvu d'un noyau de fer (16) et d'enroulements disposés sur celui-ci, le carter de stator (6) étant réalisé sous forme de composant moulé dans lequel est noyé le noyau de fer (16), et **en ce que** les enroulements ont été appliqués sur le noyau de fer (16) après coulée du noyau de fer (16) dans le carter de stator (6).
